# EUROPÄISCHE PATENTSCHRIFT

(11) **EP 2 837 285 B1**
(45) Veröffentlichungstag und Bekanntmachung des Hinweises auf die Patenterteilung: **07.07.2021**
(21) Anmeldenummer: 14179876.9
(22) Anmeldetag: 05.08.2014
(51) Int. Cl.: A01M 7/00

(54) **Spritzgestänge einer landwirtschaftlichen Feldspritze**
Spray-boom of an agricultural field sprayer
Rampe de pulvérisation d'un pulvérisateur agricole

(30) Priorität: 09.08.2013 DE 102013108636
(43) Veröffentlichungstag der Anmeldung: 18.02.2015
(73) Patentinhaber: Lemken GmbH & Co. KG, 46519 Alpen (DE)
(72) Erfinder: Büsch, Johannes, 47647 Kerken-Aldekerk (DE); Böging, Michael, 49424 Lutten-Goldenstedt (DE); Dibbern, Axel, 47495 Rheinberg (DE); Götzen, Nils, 47443 Moers (DE); Surborg, Carsten, 46519 Alpen (DE)

(56) Entgegenhaltungen:
- EP-A1- 2 526 755
- WO-A1-2004/089077
- DE-A1-102011 117 805
- None

## Beschreibung

Die Erfindung betrifft ein Spritzgestänge einer landwirtschaftlichen Feldspritze gemäß dem Oberbegriff des Patentanspruches 1.

Spritzgestänge an landwirtschaftlichen Feldspritzen sind im Arbeitsbetrieb aufgrund ihrer seitlichen Erstreckung in großer Breite erheblichen dynamischen Kräften ausgesetzt, welche sich aufgrund der Massenträgheit des Spritzgestänges und der kinematischen Bewegungen der Feldspritze bei Fahrt auf unebenem Boden oder bei Kurvenfahrt ergeben. Um aus diesen Schwingungen und Kräften resultierende Gestängeschäden sowie unterschiedliche Längs- und Querverteilungen der mit den Feldspritzen ausgebrachten Flüssigkeiten und damit einhergehenden Schäden für Gesundheit, Pflanzen und Umwelt zu vermeiden, wurden die verschiedensten Systeme zur Schwingungskompensation vorgeschlagen. Beispielsweise beschreibt die US-Patentschrift 6 053 419 ein mehrteiliges Spritzgestänge, wobei die Gestängeschwingungen der Gestängehälften zum Rahmen mit Reed-Schaltern erfasst werden und hydraulische Zylinder entgegen der Bewegungsrichtung angesteuert werden, um das Spritzgestänge wieder in eine ideale Position auszurichten. Die deutsche Offenlegungsschrift DE 100 54 285 A1 beschreibt die Regelung eines Spritzgestänges, wobei die Gierschwingungen mittels eines Lasers erfasst werden und über eine Steuerung Stellglieder wie hydraulische, pneumatische oder elektrische Motoren aktiv verstellt werden. Die aktive Schwingungskompensation über Stellmotoren verursacht jedoch aufgrund der Gestängedynamik hohe erforderliche Stellkräfte, welche sich wiederum negativ auf die Haltbarkeit der Stellmotoren und Gestängebestandteile auswirkt. Einfacher wird die Wank- und Schwingungskompensation des Spritzgestänges, indem man

Schwingungsdämpfer einsetzt, deren Dämpfungsrate verstellbar ist. Die deutsche Patentanmeldung DE 10 2011 117 805 A1 befasst sich mit teilweise regelbar ausgebildeten Dämpfungssystemen. Die deutsche Patentschrift DE 10 2009 049 469 B4 befasst sich mit einer hydraulischen Gleichlaufschwingungsdämpfung. Allen hydraulischen Dämpfungssystemen und motorischen Stellsystemen ist eine Trägheit bzw. Schalthysterese zu eigen, welche ein schnelles Eingreifen bei kritischen Gestängeschwingungen unnötig verzögert.

Aufgabe der Erfindung ist, ein semiaktives Dämpfungssystem für ein Spritzgestänge bereitzustellen, welches die obigen Nachteile behebt und auf einfache Weise einen Ausgleich der Wank- und Gierschwingungen und Bewegungen des Spritzgestänges ermöglicht.

Diese Aufgabe wird durch die Merkmale des kennzeichnenden Teiles des Anspruches 1 gelöst.

Indem die Dämpfungseigenschaften der einstellbaren Dämpfersysteme durch Zufuhr von elektrischer Energie in ihren Dämpfungseigenschaften oder Dämpfungsraten verändert werden, ist eine schnellstmögliche Reaktion und Anpassung auf Schwingungsereignisse des Spritzgestänges oder seiner Gestängebereiche ermöglicht. Durch diesen Zeitgewinn wird ein Beschleunigen der bewegten Gestängemassen vorzeitig unterbunden und kann mit wesentlich kleinerem Dämpfungsaufwand kompensiert werden, als dies bei späterem Eingreifen möglich ist.

In einer bevorzugten Erfindungsausführung ist die Zufuhr von elektrischer Energie für die einstellbaren Dämpfersysteme durch die Steuer- und Regeleinrichtung stufenlos oder in Schritten schalt- und regelbar ausgebildet. Gerade elektronische und leistungselektronische Steuer- und Regeleinrichtung können auf einfache und günstige Weise unterschiedliche elektrische Ströme und Spannungen liefern, wodurch in Verbindung mit den einstellbaren Dämpfersystemen ein adaptives und beispielsweise progressives Verhalten der einstellbaren Dämpfersysteme bei schnellster Einstellbarkeit erreicht wird.

In einer speziellen Ausführung der Erfindung sind die einstellbaren Dämpfersysteme als auf elektro- oder magnetorheologischen Medien basierende Dämpfer- oder Federdämpfersysteme ausgebildet. Hierdurch kann bei geringer Zufuhr von elektrischer oder elektromagnetischer Energie eine hohe und reproduzierbare Dämpfungswirkung bei hoher Dauerhaltbarkeit der einstellbaren Dämpfungselemente erzielt werden. Insbesondere elektro- oder magnetorheologische Flüssigkeiten sind sehr gut geeignet. Jedoch auch elastische oder plastische Materialien, deren interne Schubspannungen elektrisch oder magnetisch beeinflusst werden kann.

Ein wesentlicher Vorteil der Erfindung liegt darin, dass die auftretenden Gierbewegungen so ausgeglichen werden können, dass sich diese Belastung jeweils nur auf einen möglichst kleinen Gestängeabschnitt konzentriert und nicht auf andere Geräteteile übergeht. In diesem Sinne versteht sich der erfindungsgemäße Vorschlag, wonach seitlich beabstandet zur Achse des Gelenkes jeweils ein Stellmotor, ein einstellbares Dämpferelement und/oder ein Energiespeicher als Federdämpfelement an die Höhenverstelleinrichtung und an den Gestängebereich oder den Gestängebereich angreifen, um eine direkte Zuordnung von Dämpfer und jeweiligem Gestängebereich zu realisieren.

Die Dämpferelemente können dabei sehr unmittelbar in den Gestängebereichen zum Einsatz kommen, an denen auszugleichende Gierbelastungen gegeben sind, wenn die Dämpferelemente unabhängig voneinander oder gleichzeitig von der Steuer- und Regeleinrichtung betätigbar sind. Beim Erreichen vorgegebener Grenzwerte kann auf diese Weise aktiv in die Dämpfung eingegriffen werden.

Konkret bedeutet dies etwa, dass die beiden Gestängehälften über die Achse des Gelenkes unabhängig voneinander beweglich befestigt sind, um die Applikationsgenauigkeit deutlich zu verbessern. Damit wird kontinuierlich auf die aktuelle Fahrsituation reagiert, was zu einer optimierten Gestängelage mit einer maximalen Verteilgenauigkeit führt.

Gemäß der Erfindung sind Mittel vorhanden, welche die Gierbewegungen des Spritzgestänges oder dessen Gestängebereiche zum Rahmen, zur Umgebung oder zueinander erfassen, wobei die erfassten Bewegungen zur Regelung der einstellbaren Dämpfersysteme an die Steuer- und Regeleinrichtung übertragen werden. Beispielsweise kann durch Einsatz von Abstands-, Neigungs- oder Winkelsensoren, aber auch translatorischer oder rotatorischer Beschleunigungssensoren eine noch höhere Regelgüte und verbesserte Gestängeführung erreicht werden.

Die beiden Gestängehälften können auch in weitere Bereiche unterteilt oder durch ein Mittelteil ergänzt werden, welche sich um Achsen drehbar zueinander bewegen und mit weiteren Stellmotoren, Energiespeichern oder einstellbaren Dämpferelementen zueinander abstützen. Bei dieser Variante ist das Gestänge in noch mehr Gelenke unterteilt bzw. mit einem zusätzlichen Mittelteil ausgerüstet.

In einer besonderen Ausführung der Erfindung sind Mittel zur Kollisionserkennung eines Hindernisses oder des Bodens mit einem Gestängebereich vorhanden, welche eine tatsächliche oder drohende Kollision an die Steuer- und Regeleinrichtung übertragen, wobei die einstellbaren Dämpfersysteme zumindest im Kollisionsfall durch die Steuer- und Regeleinrichtung deaktiviert werden können. Durch diese Kollisionserkennung können die einstellbaren Dämpfersysteme durch Abschalten der elektrischen Energiezufuhr schnellstmöglich wirkungslos und frei beweglich geschaltet werden. Ein größerer Schaden an Spritzgestänge oder Hindernis wird verhindert oder Unfälle können vermieden werden.

In einer weiteren Form der Erfindung sind die Mittel als optische Sensoren ausgebildet. Durch Erfassung der Gestängebewegungen mittels einer oder mehrerer geeigneter bildverarbeitender Kamerasysteme kann auf einfache Weise ein Großteil der Gestängebewegungen oder seiner Bereiche an zentralen Stellen erfasst werden, ohne teuere und störungsanfällige Sensorik einzusetzen.

Vorstellbar ist etwa, dass die Mittel als optische 2D oder 3D-Sensoren, welche ein zwei- oder dreidimensionales Bild und/oder Abstandswerte des Spritzgestänges, dessen Gestängebereiche oder dessen Bewegungen erfassend ausgebildet sind. Durch die Verwendung eines Sensors mit einer integrierten Chipmatrix und einer darauf integrierten Abstands- oder Laufzeitauswertung kann ein dreidimensionales Abbild der erfassten Szene als Regelgröße an die Steuer- und Regeleinheit zur Regelung der einstellbaren Dämpfersysteme geliefert werden. Vorzugsweise erfolgt die Anbringung der Mittel in der Nähe des Rahmens, um die sich nach außen erstreckenden Gestängebereiche oder deren Bewegungen in optimaler Weise entsprechend dem Erfassungswinkel der Mittel zu erreichen.

Die Erfindung zeichnet sich insbesondere dadurch aus, dass über die unmittelbare elektrische Steuerung der Dämpfungsraten der einstellbaren Dämpfersysteme ein wertvoller Zeitgewinn zur Vermeidung dynamischer Gestängebewegungen und der daraus resultierenden mechanischen Belastungen entsteht. Ohne beispielsweise aufwendige hydraulische Schaltungen können einzelne Dämpfersysteme beliebig und sogar diametral unterschiedlich angesteuert werden. Durch aktives Eingreifen während der schwingenden Gestängeauslenkung in die Dämpfungsraten der einstellbaren Dämpfersysteme kann wie beim Abbremsen einer Schaukel in effizienter Weise eine stabile Gestängeführung unabhängig von Wank- und Gierbewegung und sonstigen fahrdynamischen Einflüssen der landwirtschaftlichen Feldspritze erreicht werden. Mit der erfindungsgemäßen Lösung wird insbesondere der - verglichen mit der Wankdynamik - um ein Vielfaches größere Einfluss der Gierdynamik auf die Verteilgenauigkeit berücksichtigt. Gerade an den äußeren Punkten eines Gestänges kann es ansonsten zu Über- oder Unterdosierungen des Pflanzenschutzmittels kommen. Den Gierbewegungen, die durch Beschleunigung beim An-, Auf- und Abfahren oder bei ungünstigen Bodenbeschaffenheiten sowie durch Wind entstehen, wird durch das aktive Eingreifen der Dämpfer und Federn auf das Gestänge erfolgreich entgegengewirkt. Die Folge sind minimale mechanische Gestängebelastungen sowie eine optimale Verteilung der auszubringenden Flüssigkeiten, Dünge- oder Pflanzenschutzmittel.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Figur 1: eine schematische Draufsicht einer landwirtschaftlichen Feldspritze mit Spritzgestänge,
- Figur 2: eine schematische Heckansicht des gleichen Gerätes.

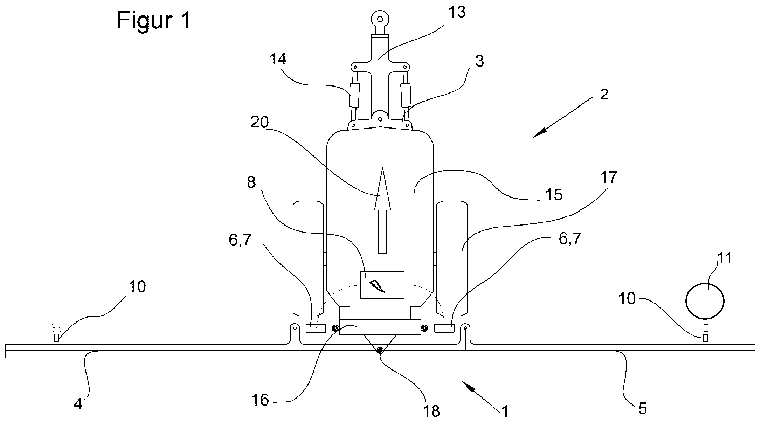

Figur 1 zeigt eine gezogene landwirtschaftliche Feldspritze 2, welche an einem nicht dargestellten Traktor angehängt und durch diesen fortbewegt wird. Zugleich dient der Traktor als mobile Energieversorgung für den mechanischen, hydraulischen und elektrischen Energiebedarf der landwirtschaftlichen Feldspritze 2. Ebenfalls ist eine durch den Traktor getragene oder motorisierte, selbstfahrende Feldspritze denkbar. Mit einer Zugeinrichtung 13, welche beweglich zum Rahmen 3 der landwirtschaftlichen Feldspritze 2 über hydraulische Verstellzylinder 14 lenkbar ist, ist die landwirtschaftliche Feldspritze 2 am Traktor angehängt. Der Rahmen 3 trägt einen Flüssigkeitsbehälter 15 und am hinteren Ende eine Höhenverstelleinrichtung 16 zur Verstellung des Abstandes des Spritzgestänges 1 zum Boden 12. Die Höhenverstelleinrichtung 16 ist Bestandteil des Rahmens 3. Unterhalb des Rahmens 3 befindet sich im hinteren Bereich eine Laufachse 17, welche die landwirtschaftliche Feldspritze 2 trägt und auf dem Boden abrollt. Hinter der Höhenverstelleinrichtung 16 sind die beiden Hälften oder Gestängebereiche 4, 5 des Spritzgestänges 1 über die Achse des Gelenkes 18 gierend beweglich zur Höhenverstelleinrichtung 16 beziehungsweise zum Rahmen 3 angeordnet. Für die Funktion der landwirtschaftlichen Feldspritze ist eine Höhenverstelleinrichtung 16 nicht zwingend erforderlich, aber von Vorteil. Daher schließt eine beanspruchte Verbindung von Elementen wie beispielsweise der Bezugszeichen 4, 5, 6, 7,18 zum Rahmen 3 ebenfalls eine mögliche Verbindung zur Höhenverstelleinrichtung 16 ein oder ersetzt die Verbindung zum Rahmen 3 durch die Verbindung zur Höhenverstelleinrichtung 16, falls diese funktional erforderlich ist. Seitlich beabstandet zur Achse des Gelenkes 18 greifen jeweils ein Stellmotor 6 sowie ein einstellbares Dämpferelement 7 an die Höhenverstelleinrichtung 16 und die Gestängebereiche 4 oder 5 an. Das einstellbare Dämpferelement 7 kann auch mit einem zusätzlichen Energiespeicher als Federdämpferelement mit einstellbarer Dämpfung realisiert sein, genauso kann der Stellmotor 6 mit einem federnden Energiespeicher ausgestattet oder durch einen solchen ersetzt werden. Letztendlich sind die Energiespeicher oder Stellelemente vorgesehen, welche das Spritzgestänge 1 in einer annähernd linearen Ausrichtung quer zur Fortbewegungsrichtung 20 in einer Ruheposition halten. Auch können die Gestängebereiche 4 und 5 in weitere Bereiche unterteilt sein oder durch einen nicht dargestellten, mittleren Bereich ergänzt sein, welche sich wiederum um Achsen drehbar zueinander bewegen und mit weiteren Stellmotoren 6, Energiespeichern oder einstellbaren Dämpferelementen 7 zueinander abstützen. Auch können die Gestängebereiche 4, 5 zu einer Transportposition manuell oder durch die Stellmotoren 6 zusammengeklappt werden. Die Höhenverstelleinrichtung 16 kann sich vertikal zum Rahmen 3 mit nicht weiter dargestellten Stellmotoren, wie beispielsweise Hydraulikzylindern, bewegen. Dargestellt ist zudem die Steuer- und Regeleinrichtung 8, welche über nicht dargestellte Leitungen mit elektrischer Energie vom Traktor versorgt wird. Die Steuer- und Regeleinrichtung 8 ist über Kabel mit den einstellbaren Dämpferelementen 7 verbunden. Durch die Beaufschlagung mit elektrischer Energie werden die einstellbaren Dämpferelemente 7 durch ihre elektro- oder magnetorheologischen Eigenschaften in ihrer Dämpfungsrate verändert. Hier sind Einstellungen von vollständiger Blockade bis völligem Freigang denkbar sowie jedwede Zwischenstufe. Ebenso ein progressiver linearer oder degressiver Anstieg der Dämpfungsrate mit zunehmender Bewegungsgeschwindigkeit der Dämpfereinzelteile zueinander. Die erforderlichen Strom- und Spannungsparameter können auf der Steuer- und Regeleinrichtung 8 in einem Programm hinterlegt oder messtechnisch erfasst werden. Seitlich am jeweiligen Gestängebereich sind Mittel 10 zur Erfassung von Hindernissen 11 oder Personen vorgesehen, welche eine drohende Kollision an die Steuer- und Regeleinrichtung 8 melden. Diese wiederum schaltet die Stellmotoren 6 und einstellbaren Dämpfungselemente 7 auf Freigang und Kollisionsschäden werden vermieden. Die Mittel 10 können beispielsweise als Näherungssensoren optisch, kapazitiv, induktiv, als Radar- oder Ultraschallsensoren ausgeführt sein. Ebenso sind Beschleunigungs-, Weg- oder Winkelaufnehmer denkbar, welche beispielsweise an Gelenkpunkten oder anderen messtechnisch sinnvollen Positionen weitere Messdaten an die Steuer- und Regeleinrichtung 8 liefern, um die Einstellparameter für die Stellmotoren 6 oder die einstellbaren Dämpfersysteme 7 noch präziser berechnen zu können. Die Stellmotoren 6 und einstellbaren Dämpfersysteme 7 können unabhängig und einzeln oder zusammen von der Steuer- und Regeleinrichtung 8 betrieben werden. Der Übersichtlichkeit halber wurde auf unterschiedliche Bezugszeichen verzichtet. Auch kann die Steuer- und Regeleinrichtung 8 mit weiteren hydraulischen oder pneumatischen Ventilen und einer dafür erforderlichen Energieversorgung verbunden sein, um die Stellmotoren 6 oder weitere Stellmittel, auch für andere Funktionen der landwirtschaftlichen Feldspritze 2, zu steuern oder zu regeln.

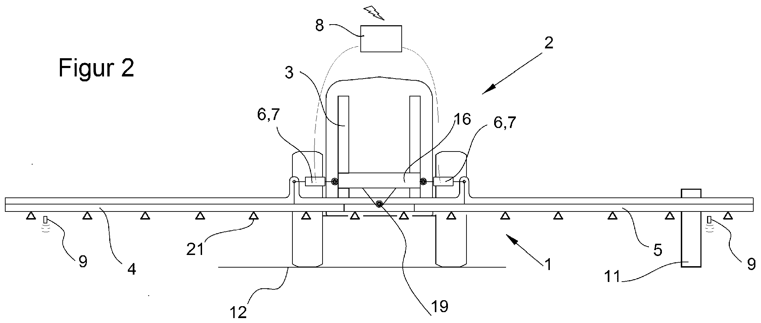

Figur 2 zeigt das Spritzgestänge 1 und die landwirtschaftliche Feldspritze 2 von hinten mit Blick auf die Fortbewegungsrichtung 20. An der Höhenverstelleinrichtung 16 als Bestandteil des Rahmens 3 sind über die Achse des Gelenkes 19 die beiden Gestängebereiche 4 und 5 unabhängig voneinander beweglich befestigt. Hierdurch können Wankbewegungen der landwirtschaftlichen Feldspritze 2 als auch unterschiedliche Anstellwinkel der Gestängebereiche 4,5 in kupiertem Gelände angefahren werden, um beispielsweise im Zusammenspiel mit der Höhenverstelleinrichtung 16 eine annähernd parallele Ausrichtung zum Boden 12 oder zu einer Pflanzenbestandskante zu erreichen. Ausgerichtet werden die Gestängebereiche über die Stellmotoren 6 oder Energiespeicher, welche deren Funktion unterstützen oder ersetzen. In gleicher Anordnung dazu befinden sich weiter einstellbare Dämpferelemente 7, welche in gleicher Weise, wie zuvor in Figur 1 beschrieben, unabhängig zueinander oder gleichzeitig von der Steuer- und Regeleinrichtung 8 betätigt oder in ihren Eigenschaften verändert werden. Wie in Figur 1 sind auch hier mehrere Gelenke 19 oder Lagerungen zur pendelnden Aufhängung einzelner Gestängebereiche oder eines hier nicht dargestellten weiteren Mittelbereiches möglich. In Abständen zueinander sind hier Ausbringeinheiten 21 als schaltbare Düsenventile, welche hier beispielsweise mit Flachstrahldüsen versehen sind, zur Ausbringung von Flüssigkeiten auf den Boden oder die Pflanzen am Spritzgestänge 1 angebracht. Die dafür erforderlichen Pumpen, Dosiereinrichtungen und Leitungen sind hier nicht weiter detailliert. Die Ausbringeinheiten 21 können auch in ihren Ausbringraten variabel verstellt werden. Die Steuerung und Regelung der Ausbringung kann ebenfalls über die Steuer- und Regeleinrichtung 8 mit übernommen werden. Mittel 9 zur Messung des Abstandes der Gestängebereiche 4, 5 zum Boden 12 oder zur Pflanzenbestandskante werden von der Steuer- und Regeleinrichtung 8 ausgewertet und zur Steuerung der Stellmotoren 6 und der einstellbaren Dämpfersysteme 7 verwendet. Wie zuvor oben beschrieben sind jedwede Sensoren und Erfassungseinrichtungen zur Unterstützung der Regelgüte der Steuer- und Regeleinrichtung 8 denkbar. Genau wie in der Beschreibung zu Figur 1 kann auch hier bei drohender Kollision eines Gestängebereiches 4, 5 mit einem Hindernis 11 oder dem Boden 12 durch die Steuer- und Regelrichtung 8 mit den Signalen der Mittel 9,10 passend in die Dämpfung oder motorische Ansteuerung eingegriffen werden. Die Steuer- und Regeleinrichtung 8 ist beispielsweise als Computersteuerung mit einem hinterlegtem Auswerte- und Regelprogramm ausgeführt. Zugleich sind analoge oder digitale Schaltstufen zur Schaltung höherer elektrischer Spannungen und Ströme, wie sie von den einzelnen einstellbaren Dämpferelementen benötigt werden, ebenfalls in der Steuer- und Regeleinrichtung 8 vorgesehen, können aber auch in einer separaten Einheit vorhanden sein. Zudem ist die Steuer- und Regeleinrichtung 8 vorzugsweise mit einer Bedien- und Anzeigeeinheit auf dem Traktor verbunden, welches Bestandteil der landwirtschaftlichen Feldspritze 2 oder des Traktors sein kann.

## Patentansprüche

1. Spritzgestänge (1), welches beweglich und höhenverstellbar an den Rahmen (3) einer landwirtschaftlichen Feldspritze (2) befestigt ist, welches mit Leitungen und zueinander beabstandeten Ausbringeinheiten (21) zur Ausbringung von Flüssigkeiten wie Dünge- und Pflanzenschutzmitteln versehen ist und sich in einer Arbeitsstellung im Wesentlichen quer zur Fortbewegungsrichtung (20) der landwirtschaftlichen Feldspritze (2) und im Wesentlichen parallel in einem Abstand zum Boden (12) oder einer Oberkante eines zu behandelnden Pflanzenbestandes erstreckt, wobei das Spritzgestänge (1) in mindestens zwei Gestängebereiche (4, 5) aufgeteilt ist, welche sich relativ zum Rahmen (3) oder zueinander selbst in einem oder mehreren Freiheitsgraden bewegen können, wobei Stellmotoren (6) und/oder einstellbare Dämpfersysteme (7) vorgesehen sind, welche die Beweglichkeit der Gestängebereiche (4, 5) zueinander oder zum Rahmen (3) direkt oder mittelbar bewirken, unterstützen oder einschränken, wobei die beiden Gestängebereiche (4, 5) über die Achse eines Gelenkes (18) gierend beweglich zu einer Höhenverstelleinrichtung (16) des Rahmens bzw. zum Rahmen (3) angeordnet sind und seitlich beabstandet zur Achse des Gelenkes (18) jeweils ein Stellmotor (6), ein einstellbares Dämpferelement (7) und oder ein Energiespeicher als Federdämpfelement an die Höhenverstelleinrichtung (16) und an den Gestängebereich (4) oder den Gestängebereich (5) angreifen,
**gekennzeichnet durch**
Mittel (9), welche die Gierbewegungen des Spritzgestänges (1) oder dessen Gestängebereiche (4, 5) zum Rahmen (3), zur Umgebung oder zueinander erfassen, wobei die erfassten Gierbewegungen zur Regelung der einstellbaren Dämpfersysteme (7) an eine Steuer- und Regeleinrichtung (8) übertragen werden, welche auf die Stellmotoren (6) und/oder einstellbaren Dämpfersysteme (7) einwirkt, die durch Zufuhr von elektrischer Energie in ihren Dämpfungseigenschaften veränderbar ausgebildet sind.

2. Spritzgestänge nach Anspruch 1,
**dadurch gekennzeichnet,**
**dass** die Zufuhr von elektrischer Energie für die einstellbaren Dämpfersysteme (7) durch die Steuer- und Regeleinrichtung (8) stufenlos oder in Schritten schalt- und regelbar ausgebildet ist.

3. Spritzgestänge nach Anspruch 1 oder 2,
**dadurch gekennzeichnet,**
**dass** die einstellbaren Dämpfersysteme (7) als auf elektro- oder magnetorheologischen Medien basierende Dämpfer - oder Federdämpfersysteme ausgebildet sind.

4. Spritzgestänge nach vorstehenden Ansprüchen,
**dadurch gekennzeichnet,**
**dass** die Dämpferelemente (7) unabhängig voneinander oder gleichzeitig von der Steuer- und Regeleinrichtung (8) betätigbar sind.

5. Spritzgestänge nach vorstehenden Ansprüchen,
**dadurch gekennzeichnet,**
**dass** die beiden Gestängehälften (4, 5) über die Achse des Gelenkes (19) unabhängig voneinander beweglich befestigt sind.

6. Spritzgestänge nach vorstehenden Ansprüchen,
**dadurch gekennzeichnet,**
**dass** die beiden Gestängehälften (4, 5) in weitere Bereiche unterteilt oder durch ein Mittelteil ergänzt sind, welche sich um Achsen drehbar zueinander bewegen und mit weiteren Stellmotoren (6), Energiespeichern oder einstellbaren Dämpferelementen (7) zueinander abstützen.

7. Spritzgestänge nach vorstehenden Ansprüchen,
**dadurch gekennzeichnet,**
**dass** Mittel (10) zur Kollisionserkennung eines Hindernisses (11) mit einem Gestängebereich (4, 5) vorhanden sind, welche eine tatsächliche oder drohende Kollision an die Steuer- und Regeleinrichtung (8) übertragen, wobei die einstellbaren Dämpfersysteme (7) zumindest im Kollisionsfall durch die Steuer- und Regeleinrichtung (8) deaktiviert werden können.

8. Spritzgestänge nach vorstehenden Ansprüchen,
**dadurch gekennzeichnet,**
**dass** die Mittel (9, 10) als optische Sensoren ausgebildet sind.

9. Spritzgestänge nach vorstehenden Ansprüchen,
**dadurch gekennzeichnet,**
**dass** die Mittel (9, 10) als optische 2D oder 3D-Sensoren, welche ein zwei- oder dreidimensionales Bild und/oder Abstandswerte des Spritzgestänges (1), dessen Gestängebereiche (4, 5) oder dessen Bewegungen erfassend ausgebildet sind.

## Claims

1. A spray-boom (1), which is movably and height-adjustably fastened to the frame (3) of an agricultural field sprayer (2) and which is provided with pipes and discharging units (21) that are spaced apart from one another for discharging liquids, such as fertilizer and plant protecting agents and which, in a working position, extends essentially transversely to the direction of movement (20) of the agricultural field sprayer (2) and essentially parallel at a distance to the ground (12) or an upper edge of a plant stock to be treated, wherein the spray-boom (1) is divided into at least two boom regions (4, 5), which can move relative to the frame (3) or to one another even in one or several degrees of freedom, wherein actuators (6) and/or settable damper systems (7) are provided, which directly or indirectly effect, support, or limit the movability of the boom regions (4, 5) to one another or to the frame (3), wherein the two boom regions (4, 5) are movably arranged so as to jaw to a height adjustment device (16) of the frame or to the frame (3), respectively, via the axis of a joint (18), and an actuator (6), a settable damper element (7), and or an energy storage in each case engage as spring damper element with the height adjustment device (16) and with the boom region (4) or the boom region (5) laterally spaced apart from the axis of the joint (18), **characterized by** means (9), which detect the yawing movements of the spray-boom (1) or of the boom regions (4, 5) thereof to the frame (3), to the surrounding area, or to one another, wherein the detected yawing movements are transferred to a control and regulating device (8) in order to regulate the settable damper systems (7), which control and regulating device acts on the actuators (6) and/or settable damper systems (7), the damping properties of which are formed to be variable by the supply of electrical energy.

2. The spray-boom according to claim 1,
**characterized in**
**that** the supply of electrical energy for the settable damper systems (7) is formed to be capable of being switched or regulated continuously or in stages by means of the control and regulating device (8).

3. The spray-boom according to claim 1 or 2,
**characterized in**
**that** the settable damper systems (7) are formed as damper or spring damper systems, which are based on electrorheological or magnetorheological media.

4. The spray-boom according to preceding claims,
**characterized in**
**that** the damper elements (7) are operable independently of one another or simultaneously by the control and regulating device (8).

5. The spray-boom according to preceding claims,
**characterized in**
**that** the two boom halves (4, 5) are movably fastened independently of one another via the axis of the joint (19).

6. The spray-boom according to preceding claims,
**characterized in**
**that** the two boom halves (4, 5) are divided into further regions or are supplemented by a central part, which move relative to one another so as to be capable of rotating around axes and which are supported relative to one another by means of further actuators (6), energy storages, or settable damper elements (7).

7. The spray-boom according to preceding claims,
**characterized in**
**that** means (10) for the collision detection of an obstacle (11) with a boom region (4, 5) are present, which transfer an actual or impending collision to the control and regulating device (8), wherein the settable damper systems (7) can be detected by means of the control and regulating device (8) at least in the event of a collision.

8. The spray-boom according to preceding claims,
**characterized in**
**that** the means (9, 10) are formed as optical sensors.

9. The spray-boom according to preceding claims,
**characterized in**
**that** the means (9, 10) are formed as optical 2D or 3D sensors, which detect a two- or three-dimensional image and/or distance values of the spray-boom (1), of the boom regions (4, 5) thereof, or of the movements thereof.

## Revendications

1. Rampe de pulvérisation (1), qui est fixée de manière mobile et réglable en hauteur sur le cadre (3) d'un pulvérisateur agricole (2), qui est munie de conduites et d'unités d'épandage (21) écartées les unes des autres, pour épandre des liquides, comme des produits fertilisants et phytosanitaires et qui dans une position de travail, s'étend sensiblement à la transversale de la direction de déplacement (20) du pulvérisateur agricole (2) et sensiblement à la parallèle avec un écart par rapport au sol (12) ou à une arête supérieure d'une végétation qui doit être traitée, la rampe de pulvérisation (1) étant divisée en au moins deux zones de rampe (4, 5), lesquelles sont mobiles par rapport au cadre (3) ou les unes par rapport aux autres avec un ou plusieurs degrés de liberté, des servomoteurs (6) et/ou des systèmes amortisseurs (7) réglables étant prévus, qui induisent, assistent ou réduisent directement ou indirectement la mobilité des zones de rampe (4, 5) les unes par rapport aux autres ou par rapport au cadre (3), les deux zones de rampe (4, 5) étant placées en étant mobiles en lacets via l'axe d'une articulation (18) vers un système de réglage en hauteur (16) du cadre ou vers le cadre (3) et avec un écart latéral par rapport à l'axe de articulation (18), respectivement un servomoteur (6), un élément amortisseur (7) réglable ou un accumulateur d'énergie s'engageant en tant qu'élément amortisseur à ressort s'engageant sur le système de réglage en hauteur (16) et sur la zone de rampe (4) ou sur la zone de rampe (5), **caractérisée par**
des moyens (9), qui détectent les mouvements de lacets de la rampe de pulvérisation (1) ou de ses zones de rampe (4, 5) par rapport au cadre (3), à l'environnement ou les unes par rapport aux autres, les mouvements de lacets étant transmis pour le réglage des systèmes amortisseurs (7) réglables à un système de commande et de réglage (8), qui agit sur les servomoteurs (6) et/ou sur les systèmes amortisseurs (7) réglables, qui sont conçus avec des propriétés d'amortissement variables par l'apport d'énergie électrique.

2. Rampe de pulvérisation selon la revendication 1,
**caractérisée en ce que**
l'apport d'énergie électrique pour les systèmes amortisseurs (7) réglables par le système de commande et de réglage (8) est conçu en continu ou de manière commutable et réglable par étapes.

3. Rampe de pulvérisation selon la revendication 1 ou 2,
**caractérisée en ce que**
les systèmes amortisseurs (7) réglables sont conçus sous la forme de systèmes amortisseurs ou de systèmes amortisseurs à ressort basés sur des fluides électrorhéologiques et/ou magnétorhéologiques.

4. Rampe de pulvérisation selon les revendications précédentes,
**caractérisée en ce que**
les éléments amortisseurs (7) sont aptes à être actionnés indépendamment les uns des autres ou simultanément par le système de commande et de réglage (8).

5. Rampe de pulvérisation selon les revendications précédentes,
**caractérisée en ce que**
les deux moitiés de rampe (4, 5) sont fixées en étant mobiles indépendamment l'une de l'autre via l'axe de l'articulation (19).

6. Rampe de pulvérisation selon les revendications précédentes,
**caractérisée en ce que**
les deux moitiés de rampe (4, 5) sont divisées en zones supplémentaires ou complétées par une partie centrale, lesquelles se meuvent en étant rotatives les unes par rapport aux autres, autour d'axes et en se soutenant mutuellement avec des servomoteurs (6), des accumulateurs d'énergie ou des éléments amortisseurs (7) réglables supplémentaires.

7. Rampe de pulvérisation selon les revendications précédentes,
**caractérisée en ce que**
des moyens (10) sont présents pour identifier des collisions d'un obstacle (11) avec une zone de rampe (4, 5), lesquels transmettent au système de commande et de réglage (8) une collision réelle ou imminente, les systèmes amortisseurs (7) réglables pouvant être désactivés par le système de commande et de réglage (8) au moins en cas de collision.

8. Rampe de pulvérisation selon les revendications précédentes,
**caractérisée en ce que**
les moyens (9, 10) sont conçus sous la forme de capteurs optiques.

9. Rampe de pulvérisation selon les revendications précédentes,
**caractérisée en ce que**
les moyens (9, 10) sont conçus sous la forme de capteurs optiques en 2D ou en 3D, lesquels sont conçus pour détecter une image bidimensionnelle ou tridimensionnelle et/ou des valeurs d'écart de la rampe de pulvérisation (1), de ses zones de rampe (4, 5) ou de ses mouvements.
